# FASCICULE DE BREVET EUROPEEN

(11) **EP 1 014 528 B1**
(45) Date de publication et mention de la délivrance du brevet: **29.04.2009**
(21) Numéro de dépôt: 99410164.0
(22) Date de dépôt: 18.11.1999
(51) Int. Cl.: H02H 7/055, H01H 9/00

(54) **Installation électrique comportant un transformateur, un commutateur de prises hors tension et un appareillage de coupure en charge**
Elektroinstallation mit Wandler, Stufenschalter und Lastschalter
Electrical installation comprising transformer, off load tap changer and load breaker

(30) Priorité: 15.12.1998 FR 9815959
(43) Date de publication de la demande: 28.06.2000
(73) Titulaire: Schneider Electric Industries SAS, 92500 Rueil-Malmaison (FR)
(72) Inventeur: Filiputti, Hugues, 38050 Grenoble cedex 09 (FR); Preve, Christophe, 38050 Grenoble cedex 09 (FR)
(74) Mandataire: Broydé, Marc

(56) Documents cités:
- EP-A- 0 468 299
- US-A- 4 138 602
- US-A- 4 504 811
- US-A- 4 791 520
- US-A- 5 744 764

## Description

L'invention concerne de manière générale des appareillages électriques à inductance munis d'un commutateur de prises hors tension.

Comme décrit dans le document US 5,744,764, on utilise communément les commutateurs de prises hors tension pour modifier le nombre des spires d'un enroulement qui sont parcourues par un courant. En particulier, et comme l'enseigne le document US-A-4 504 811, ces commutateurs de prises sont utilisés pour les transformateurs triphasés, dans le but d'ajuster le rapport de transformation à la tension désirée. Habituellement, certains des enroulements de chaque phase du primaire ou du secondaire du transformateur sont subdivisés en sections, chaque section étant munie d'une borne ou prise d'entrée. Le commutateur de prises comporte, pour chaque phase, une pluralité de contacts fixes reliés chacun à l'une desdites prises et un contact mobile qui peut être déplacé de façon à se connecter sur l'un quelconque des contacts fixes. En commutant le commutateur de prises, on modifie le nombre des spires actives des enroulements de chaque phase, parcourues par le courant. Une autre utilisation des commutateurs de prises hors tension dans les transformateurs triphasés concerne le passage d'un couplage des enroulements en série à un couplage en étoile. Une autre utilisation concerne le passage d'un branchement en parallèle à un branchement en série des enroulements de chaque phase.

Avec une telle architecture, la commutation du commutateur de prises doit impérativement être effectuée hors tension, d'où son nom. En pratique, il est alors nécessaire d'ouvrir un appareil de coupure situé en amont du transformateur. Cette interruption de service n'est pas considérée comme un gros inconvénient, car l'ajustement du rapport de transformation n'est fait que très rarement, pas plus d'un dizaine de fois dans la vie d'un transformateur, qui peut excéder trente ans.

Par contre, les risques consécutifs à une mauvaise manipulation lors du changement de prises sont considérables pour les personnes et le matériel. En effet, lorsque le primaire du transformateur est alimenté, la commutation du commutateur de prises engendre un arc électrique qui entraîne la destruction du commutateur. De plus, cet arc peut avoir des conséquences importantes pour la sécurité des biens et des personnes, avec notamment un risque d'explosion car le commutateur de prises est généralement situé à l'intérieur d'une cuve de confinement du transformateur.

Comme décrit dans le document US 4,791,520, on connaît par ailleurs des installations de transformation comportant un transformateur et un appareillage de coupure, situé en amont de celui-ci et destiné entre autres à sa mise hors tension. Cet appareillage de coupure peut être par exemple un disjoncteur, comme décrit dans le document EP-A-O 468 299, ou un interrupteur. L'ouverture de l'appareillage de coupure peut être déclenchée soit manuellement, soit automatiquement dans des conditions anormales de fonctionnement, notamment lorsque le transformateur est soumis à des conditions de surcharge ou à un défaut interne.

La présente invention vise à éliminer tout risque pour les biens et les personnes lors de la manipulation d'un commutateur de prises hors tension dans une installation de transformation électrique. Plus particulièrement, elle vise à éliminer ces risques à faible coût, dans une installation comportant, outre le transformateur, un appareillage de coupure en charge.

Selon l'invention, cet objectif est atteint grâce à une installation électrique de transformation comportant :
- un transformateur électrique comportant des enroulements primaires et secondaires, formant un circuit primaire comportant une ou plusieurs phases primaires et alimenté par des conducteurs d'alimentation, et un circuit secondaire comportant une ou plusieurs phases secondaires,
- un commutateur de prises hors tension comportant
   - des contacts électriques fixes reliés électriquement aux enroulements,
   - un ou plusieurs contacts mobiles pontants permettant de réaliser des branchements entre certains desdits contacts fixes,
   - un organe de commutation du ou des contacts mobiles, permettant de déplacer le ou les contacts mobiles entre une première position dans laquelle ils établissent un premier branchement entre les contacts fixes et une deuxième position dans laquelle ils établissent un deuxième branchement entre les contacts fixes,
   - un organe de manoeuvre, apte à prendre une première position, une deuxième position et une troisième position, intermédiaire entre les première et deuxième positions,
   - une chaîne cinématique entre l'organe de manoeuvre et l'organe de commutation, telle que lorsque l'organe de manoeuvre passe de sa première position à sa deuxième position, il entraîne l'organe de commutation de sa première position à sa deuxième position,
- un appareillage de coupure en charge comportant
   - pour chaque conducteur d'alimentation du circuit primaire, un pôle apte à prendre une position ouverte correspondant à l'interruption du courant dans le conducteur d'alimentation et une position fermée correspondant au passage du courant dans le conducteur d'alimentation,
   - un mécanisme d'ouverture à accumulation d'énergie, apte à passer d'un état de haute énergie à un état de basse énergie stable et lié à chaque pôle par une chaîne cinématique telle qu'il entraîne le ou les pôles de leur position fermée à leur position ouverte, en passant de son état de haute énergie à son état de basse énergie, le mécanisme d'ouverture étant muni d'un verrou apte à prendre une position de verrouillage dans laquelle il est apte à verrouiller le mécanisme d'ouverture dans son état de haute énergie, et une position de déverrouillage dans laquelle il permet au mécanisme d'ouverture de quitter son état de haute énergie,
- des moyens de liaison entre l'organe de manoeuvre du commutateur de prises et le verrou du mécanisme d'ouverture de l'appareillage de coupure en charge, tels que lorsque l'organe de manoeuvre passe de sa première position à sa position intermédiaire, le verrou passe dans sa position de déverrouillage.

Préférentiellement, la chaîne cinématique ne transmet pas au mécanisme de commutation le mouvement de l'organe de manoeuvre entre sa première position et sa position intermédiaire, et fait passer le mécanisme de commutation de sa première à sa deuxième position lorsque l'organe de manoeuvre passe de sa position intermédiaire à sa deuxième position. Cette disposition assure un séquencement correct des opérations de coupure et de commutation.

Selon un mode de réalisation, les moyens de liaison comportent une chaîne cinématique entre l'organe de manoeuvre et le verrou. La transmission mécanique permet d'assurer la fiabilité sur de très longues périodes, allant au delà de vingt ans. L'organe de manoeuvre assure alors de façon séquencée sa fonction de commande du commutateur de prises, et une fonction de commande d'ouverture de l'appareillage de coupure. Il est donc possible d'utiliser l'organe de manoeuvre comme organe de commande manuelle d'ouverture de l'appareillage de coupure, ce qui permet d'éliminer une commande manuelle d'ouverture séparée pour l'appareillage de coupure.

Cette transmission mécanique peut être obtenue grâce à un câble. Elle met à profit la structure habituelle des poignées de manoeuvre des changeurs de prise du commerce, qui doivent être tirées axialement avant de pouvoir être tournées d'une position à l'autre. Alternativement, d'autres moyens sont naturellement possibles. Elle peut être également à pignon et crémaillère.

Préférentiellement, l'installation comporte une cuve qui contient le transformateur, les pôles du dispositif de coupure et le ou les commutateurs du commutateur de prises. Cette disposition permet de proposer à l'exploitant une unité prête à l'installation. Elle est particulièrement avantageuse lorsque l'appareillage de coupure fait partie d'un dispositif de protection du transformateur, assurant la coupure du primaire lorsque sont rencontrées des conditions anormales de fonctionnement. On obtient alors sans surcoût notoire une unité auto-protégée.

Préférentiellement, les contacts du commutateur de prises sont disposés entre le pôle correspondant de l'appareillage de coupure et les enroulements du transformateur. En effet, cette disposition permet d'assurer que la commutation a lieu hors tension et hors courant. La disposition inverse est également envisageable, mais elle ne permet qu'une commutation hors courant.

Alternativement à un liaison cinématique, une liaison non purement mécanique est également envisageable. C'est le cas si le dispositif de coupure en charge comporte des moyens de déclenchement électromécaniques, les moyens de liaison comportant un capteur émettant un signal électrique lorsque l'organe de manoeuvre se trouve dans sa troisième position ainsi que des moyens de transmission du signal du capteur aux moyens de déclenchement électromécaniques, les moyens de déclenchement électromécaniques étant aptes à faire passer le verrou de sa position de verrouillage à sa position de déverrouillage en réponse à ce signal. Les moyens de transmission peuvent être de tous ordre, et notamment filaire ou radioélectriques.

Avantageusement, l'appareillage de coupure comporte un mécanisme de fermeture apte à entraîner le ou les pôles de leur position ouverte à leur position fermée, l'installation comportant en outre des moyens de liaison entre l'organe de manoeuvre du commutateur de prises et le mécanisme de fermeture de l'appareillage de coupure en charge, tels que lorsque l'organe de manoeuvre se trouve dans sa position intermédiaire, le mécanisme de fermeture ne peut pas entraîner le ou les pôles de leur position ouverte à leur position fermée. On évite ainsi le risque d'une refermeture dans une position non indexée du commutateur de prise.

Avantageusement, l'appareillage de coupure est un disjoncteur disposé en amont du dispositif de commutation, de sorte qu'il assure également une fonction de protection du transformateur.

D'autres avantages et caractéristiques de l'invention ressortiront de la description qui va suivre d'un mode de réalisation de l'invention, donné à titre d'exemple non limitatif et représenté aux dessins annexés dans lesquels:
- la figure 1 représente un schéma électrique d'un transformateur selon un premier mode de réalisation de l'invention ;
- la figure 2 représente une vue en perspective d'une installation de transformation moyenne tension basse tension de distribution selon le premier mode de réalisation de l'invention ;

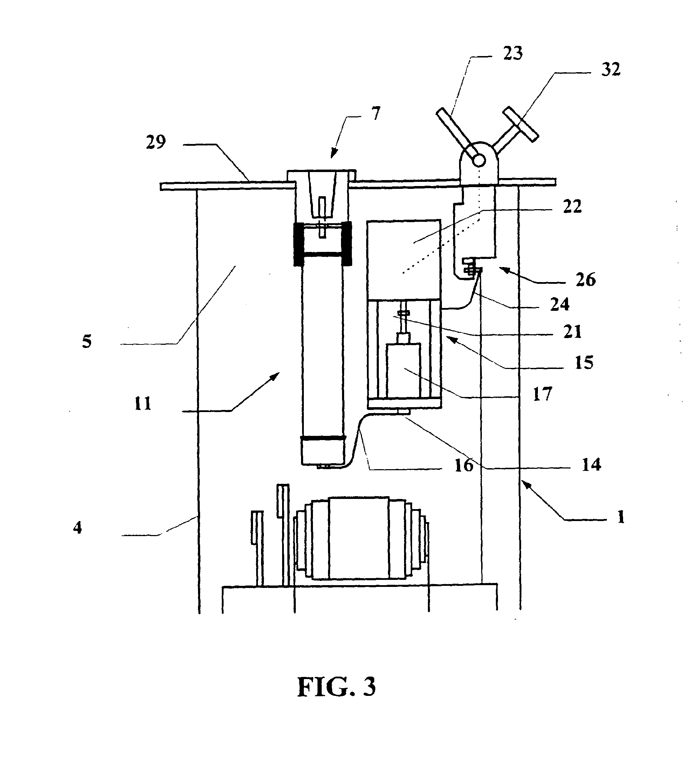

- la figure 3 représente une coupe schématisée de l'intérieur de l'installation de la figure 2 ;
- la figure 4 représente schématiquement un commutateur de prise selon l'invention, dans une position de blocage ;
- la figure 5 représente le commutateur de la figure 4 dans une position intermédiaire de manoeuvre.

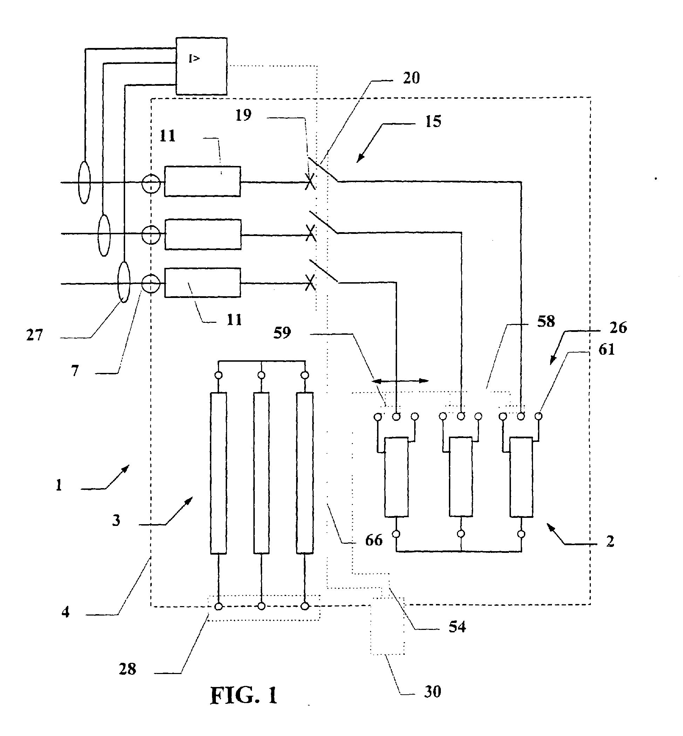

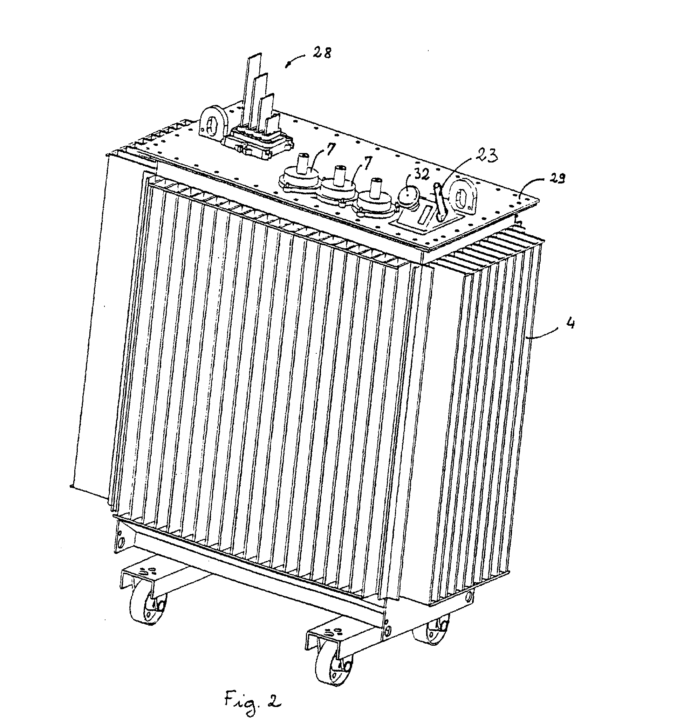

En référence aux figures 1 et 2, une installation de transformation électrique de distribution comporte un transformateur triphasé moyenne tension / basse tension 1 pourvue d'enroulements primaires 2 et secondaires 3, et confiné dans une cuve étanche 4 remplie d'un diélectrique liquide ou gazeux 5.

La face supérieure de la cuve 4 comporte un couvercle 29 sur lequel viennent se fixer un certain nombre de traversées. Chaque phase du circuit primaire du transformateur pénètre dans la cuve 4 par l'intermédiaire d'une traversée moyenne tension 7, alors que la liaison électrique entre les bornes secondaires du transformateur et le circuit basse tension extérieur à la cuve s'effectue par l'intermédiaire d'une traversée unique 28 décrite par ailleurs dans une demande de brevet français portant le numéro de dépôt 98 14172.

La traversée coopère avec une extrémité d'un fusible 11. L'autre extrémité du fusible 11 est reliée à une plage de connexion côté source 14 d'un module disjoncteur 15, par l'intermédiaire d'une liaison électrique 16 comportant un conducteur électrique gainé. La traversée et sa liaison au fusible peuvent suivre l'enseignement de la demande de brevet française portant le numéro de dépôt 98 12517.

Le module disjoncteur 15 comporte, pour chaque phase, une ampoule à vide 17 de structure conventionnelle, avec un corps formant une chambre cylindrique contenant un organe de contact fixe 19 (représenté schématiquement sur la figure 1) et un organe de contact mobile 20 guidé axialement dans l'ampoule et prolongé par une tige de commande 21. Une ampoule de ce type est décrite par exemple dans le document US-A-4 323 871.

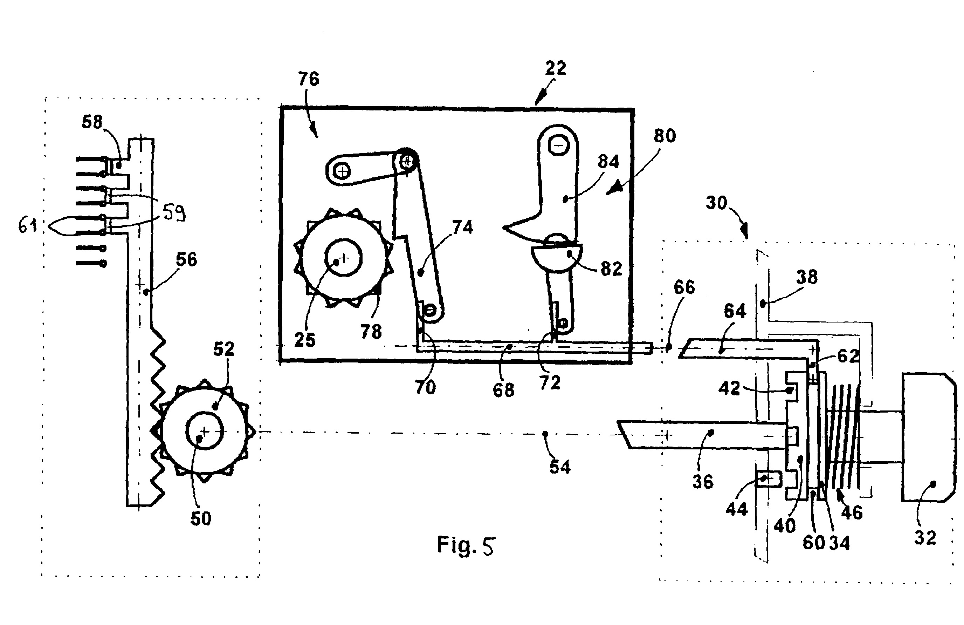

Le disjoncteur est pourvu d'un mécanisme de commande d'ouverture et de fermeture 22 actionné par un levier de manoeuvre 23 qui permet, par un mouvement alternatif de pompage, d'entraîner en rotation un arbre 25 (figure 5) provoquant l'armement d'un ressort d'accumulation puis, une fois un point mort dépassé, la libération impulsive de l'énergie du ressort provoquant la fermeture simultanée des contacts des trois phases.

La plage de connexion côté charge du module disjoncteur 15 est reliée aux enroulements primaires 2 du transformateur 1 par l'intermédiaire d'un commutateur de prise 26. Le commutateur comprend de manière connue, d'une réglette 58 mobile en translation et portant des contacts pontants 59. La réglette mobile 58 coulisse le long d'une barrette fixe 60 de connexion portant pour chaque phase deux contacts 61 assurant des départs vers deux points différents des enroulements primaires ainsi qu'un contact relié à la plage côté charge du disjoncteur. Le déplacement de la barrette mobile permet, simultanément pour toutes les phases du primaire, le branchement de la plage côté charge du disjoncteur sélectivement à l'un ou l'autre des points de départ 61 vers l'enroulement primaire correspondant.

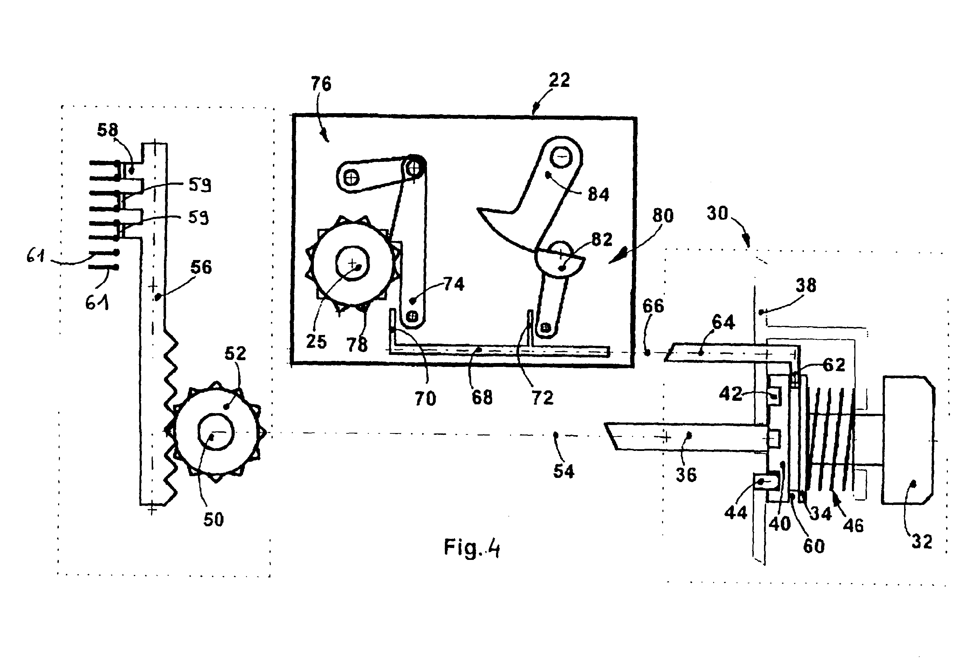

Le commutateur de prise 26 est représenté sur les figures 4 et 5. Il comporte un sélecteur 30 pourvu d'une manette 32 solidaire d'une couronne 34 dentée elle même solidaire d'un axe 36 guidé en rotation et en translation par rapport à un support fixe 38. La couronne 34 comporte à sa périphérie une succession de dents 40 et de créneaux 42 axiaux, aptes à coopérer avec un téton fixe 44. Un ressort 46 rappelle axialement la couronne 34 vers le téton 44.

L'axe 36 du sélecteur est relié cinématiquement à un arbre 50 pourvu d'un pignon 52, par l'intermédiaire d'une chaîne cinématique 54 de sorte qu'un pivotement angulaire de la manette 32 provoque une rotation correspondante du pignon 52, et qu'une translation de la manette 32 soit sans effet sur la position du pignon 52. Une telle transmission du mouvement peut être effectuée par exemple par l'intermédiaire d'un profil cannelé de l'axe 36 coulissant dans une partie creuse complémentaire de l'arbre 50 solidaire du pignon 52.

Classiquement, et conformément au commutateurs de prise du commerce, notamment les commutateurs triphasés à crémaillère commercialisés par la société " ASP, Appareils scientifiques de précision ", sise à Fontaine, Isère, France, le pignon 52 entraîne une crémaillère 56 solidaire de la réglette 58.

La couronne 34 est pourvue par ailleurs d'une rainure périphérique radiale 60. Dans cette rainure 60 est engagé un doigt 62 d'un tiroir 64 de transmission libre de se déplacer en translation parallèlement à l'axe 36 du sélecteur 30. Le tiroir 64 est lié cinématiquement, par exemple par l'intermédiaire d'un câble 66, à une tirette 68 munie de deux doigts 70, 72. Le premier doigt 70 coopère avec un cliquet 74 d'un dispositif d'armement 76 comportant une roue à rochet 78. Le deuxième doigt 72 agit sur un verrou d'ouverture 80 du mécanisme de commande, constitué par une demi lune 82 retenant un cliquet d'ouverture 84.

Dans la position de la figure 4, le téton 44 est engagée dans un des créneaux 42, de sorte qu'il n'est pas possible de pivoter la manette 32 du sélecteur 30. La réglette mobile 56 est donc immobilisée. La tirette 68 n'interfère ni avec le mécanisme d'armement 76, ni avec le verrou d'ouverture 80, quelles que soient les positions de ceux-ci.

Lorsqu'un opérateur manoeuvre la manette 32, il doit dans un premier temps tirer celle-ci, de manière à atteindre la position de la figure 5. Ce mouvement de translation de la manette 32 provoque un déplacement du tiroir 64 qui entraîne la tirette 68, de sorte que les doigts 70, 72 interfèrent respectivement avec le cliquet 74 du mécanisme d'armement 76 et avec la demi-lune d'ouverture 82. Le disjoncteur, quelle qu'ait été sa position antérieure, se retrouve en position ouverte, et il n'est plus alors possible de l'armer. Le circuit électrique est ouvert et aucun courant ne traverse plus les contacts de la réglette.

Par ailleurs, le mouvement de translation de la manette 32 a libéré la couronne 34 du téton 44, de sorte qu'il devient possible de tourner la manette 32 autour de son axe et de choisir une nouvelle position angulaire. Chaque créneau 42 correspond a une position indexée de commutation de la réglette mobile 58. Si la manette 32 est relâchée alors que le téton 44 se trouve au niveau d'une dent 40, entre deux créneaux 42, alors la manette 32 se trouve empêchée de reprendre sa position de repos, la tirette 68 restant dans sa position active d'interférence avec le cliquet du mécanisme d'armement et avec le verrou d'ouverture. Ainsi est évité tout risque électrique dû à un mauvais positionnement de la réglette mobile 58, puisque le circuit reste ouvert et que le réarmement est impossible.

Lorsque le téton 44 se retrouve en face d'un créneau 42 et que la manette 32 est relâchée, le ressort 46 rappelle la manette 32 de sorte que le téton 44 entre dans le créneau 42.

En particulier, la chaîne cinématique entre la couronne et le pignon peut être de forme quelconque, pour autant qu'elle réponde à sa fonction. L'entraînement de la réglette mobile par pignon peut d'ailleurs être remplacé par tout autre mode d'entraînement adéquat, notamment par câbles.

Par ailleurs, il peut être avantageux de prévoir une transmission à renvoi d'angle, par l'intermédiaire d'un joint de cardan par exemple, entre un arbre creux coopérant avec l'axe cannelé 36 solidaire de la couronne et l'arbre 50 portant le pignon 52.

La manette peut être disposée dans une position non perpendiculaire au plan du couvercle de la cuve, par exemple suivant un angle de 45° environ.

Il est possible de prévoir une démultiplication dans la chaîne cinématique de transmission 54 du mouvement rotatif de la manette.

Pour répondre aux conditions particulières d'utilisation, divers branchements sont possibles, conformément à l'état de la technique. Le nombre de contacts fixes par phase peut être plus important. On prévoit par exemple souvent cinq contacts.

Alternativement à la liaison mécanique entre la manette et le verrou d'ouverture, il est possible de prévoir une liaison électrique.

L'invention est applicable à tout type de disjoncteur ou d'appareillage de coupure.

Elle est applicable à tout type de branchement du commutateur de prise hors tension : branchement de réglage en triangle, branchement de réglage série, branchement de commutation étoile triangle, branchement de commutation série parallèle.

## Revendications

1. Installation électrique de transformation comportant :
• un transformateur électrique (1) comportant des enroulements primaires (2) et secondaires (3), formant un circuit primaire comportant une ou plusieurs phases primaires et alimenté par des conducteurs d'alimentation, et un circuit secondaire comportant une ou plusieurs phases secondaires,
• un commutateur de prises hors tension (26) comportant
• des contacts électriques fixes (61) reliés électriquement aux enroulements,
• un ou plusieurs contacts mobiles pontants (59) permettant de réaliser des branchement entre certains desdits contacts fixes,
• un organe de commutation (58) du ou des contacts mobiles (59), permettant de déplacer le ou les contacts mobiles au moins entre une première position dans laquelle ils établissent un premier branchement entre les contacts fixes (61) et une deuxième position dans laquelle ils établissent un deuxième branchement entre les contacts fixes (61),
• un organe de manoeuvre (32), apte à prendre au moins une première position, une deuxième position et une troisième position, intermédiaire entre les première et deuxième positions,
• une chaîne cinématique (54) entre l'organe de manoeuvre et l'organe de commutation, telle que lorsque l'organe de manoeuvre passe de sa première position à sa deuxième position, il entraîne l'organe de commutation de sa première position à sa deuxième position,
installation électrique, **caractérisée en ce qu'**elle comporte :
• un appareillage de coupure en charge (15) comportant
• pour chaque conducteur d'alimentation du circuit primaire, un pôle apte à prendre une position ouverte correspondant à l'interruption du courant dans le conducteur d'alimentation et une position fermée correspondant au passage du courant dans le conducteur d'alimentation,
• un mécanisme d'ouverture (22) à accumulation d'énergie, apte à passer d'un état de haute énergie à un état de basse énergie stable et lié à chaque pôle par une chaîne cinématique telle qu'il entraîne le ou les pôles de leur position fermée à leur position ouverte, en passant de son état de haute énergie à son état de basse énergie, le mécanisme d'ouverture étant muni d'un verrou (82) apte à prendre une position de verrouillage dans laquelle il est apte à verrouiller le mécanisme d'ouverture dans son état de haute énergie, et une position de déverrouillage dans laquelle il permet au mécanisme d'ouverture de quitter son état de haute énergie,
• des moyens de liaison (66) entre l'organe de manoeuvre (32) du commutateur de prises et le verrou (82) du mécanisme d'ouverture de l'appareillage de coupure en charge, tels que lorsque l'organe de manoeuvre (32) passe de sa première position à sa position intermédiaire, le verrou (32) passe dans sa position de déverrouillage.

2. Installation selon la revendication 1, dans laquelle la chaîne cinématique (54) ne transmet pas à l'organe de commutation (58) le mouvement de l'organe de manoeuvre (32) entre sa première position et sa position intermédiaire, et fait passer l'organe de commutation (58) de sa première à sa deuxième position lorsque l'organe de manoeuvre (32) passe de sa position intermédiaire à sa deuxième position.

3. Installation selon la revendication 1, dans laquelle les moyens de liaison (66) comportent une chaîne cinématique entre l'organe de manoeuvre (32) et le verrou (82).

4. Installation selon la revendication 1, qui comporte une cuve (4) qui contient le transformateur (1), les pôles du dispositif de coupure et les contacts (59, 61) du commutateur de prises.

5. Installation selon la revendication 1, dans laquelle les contacts (59, 61) du commutateur de prises sont branchés entre le pôle correspondant de l'appareillage de coupure (15) et les enroulements (2,3) du transformateur.

6. Installation selon la revendication 1, dans laquelle le dispositif de coupure en charge (15) comporte des moyens de déclenchement électromécaniques, et dans laquelle lesdits moyens de liaison (66) comportent un capteur émettant un signal électrique lorsque l'organe de manoeuvre se trouve dans sa troisième position ainsi que des moyens de transmission du signal du capteur aux moyens de déclenchement électromécaniques, les moyens de déclenchement électromécaniques étant aptes à faire passer le verrou de sa position de verrouillage à sa position de déverrouillage en réponse à ce signal.

7. Installation selon la revendication 1, dans laquelle l'appareillage de coupure comporte un mécanisme de fermeture apte à entraîner le ou les pôles de leur position ouverte à leur position fermée, et comportant des moyens de liaison entre l'organe de manoeuvre du commutateur de prises et le mécanisme de fermeture de l'appareillage de coupure en charge, tels que lorsque l'organe de manoeuvre se trouve dans sa position intermédiaire, le mécanisme de fermeture ne peut pas entraîner le ou les pôles de leur position ouverte à leur position fermée.

8. Installation selon la revendication 1, dans laquelle l'appareillage de coupure est un disjoncteur disposé en amont du dispositif de commutation.

## Claims

1. An electrical transformer installation comprising:
- an electrical transformer (1) comprising primary windings (2) and secondary windings (3), forming a primary circuit comprising one or more primary phases and fed by power supply conductors, and a secondary circuit comprising one or more secondary phases,
- an off-load tap changer (26) comprising
- stationary electrical contacts (61) electrically connected to the windings,
- one or more movable bridging contacts (59) enabling connections to be made between certain of said stationary contacts,
- a switching means (58) of the movable contact or contacts (59), enabling the movable contact or contacts to be moved at least between a first position in which they make a first connection between the stationary contacts (61) and a second position in which they make a second connection between the stationary contacts (61),
- an operating means (32) able to take at least a first position, a second position and a third position, intermediate between the first and second positions,
- a kinematic transmission system (54) between the operating means and the switching means, such that when the operating means moves from its first position to its second position, it moves the switching means from its first position to its second position,
an electrical installation **characterized in that** it comprises:
- an on-load breaking device (15) comprising:
- for each power supply conductor of the primary circuit, a pole able to take an open position corresponding to breaking of the current in the power supply conductor and a closed position corresponding to flow of the current in the power supply conductor,
- an energy storage opening mechanism (22), able to switch from a high energy state to a stable low energy state and connected to each pole by a kinematic transmission system such that it moves the pole or poles from their closed position to their open position, switching from its high energy state to its low energy state, the opening mechanism being equipped with a latch (82) able to take a latched position in which it is designed to lock the opening mechanism in its high energy state, and an unlatched position in which it enables the opening mechanism to leave its high energy state,
- connecting means (66) between the operating means (32) of the tap changer and the latch (82) of the opening mechanism of the on-load breaking device, such that when the operating means (32) moves from its first position to its intermediate position, the latch (32) moves to its unlatched position.

2. The installation according to claim 1, wherein the kinematic transmission system (54) does not transmit the movement of the operating means (32) between its first position and its intermediate position to the switching mechanism (58), and makes the switching mechanism (58) move from its first position to its second position when the operating means (32) moves from its intermediate position to its second position.

3. The installation according to claim 1, **characterized in that** the connecting means (66) comprise a kinematic transmission system between the operating means (32) and latch (82).

4. The installation according to claim 1, comprising a tank (4) containing the transformer (1), the poles of the breaking device and the tap changer contacts (59, 61).

5. The installation according to claim 1, wherein the tap changer contacts (59, 61) are connected between the corresponding pole of the breaking device (15) and the transformer windings (2, 3).

6. The installation according to claim 1, wherein the on-load breaking device (15) comprises electromechanical tripping means, and wherein said connecting means (66) comprise a sensor emitting an electrical signal when the operating means is in its third position and also transmission means for transmitting the sensor signal to the electromechanical tripping means, the electromechanical tripping means being able to make the latch move from its latched position to its unlatched position in response to this signal.

7. The installation according to claim 1, wherein the breaking device comprises a closing mechanism designed to move the pole or poles from their open position to their closed position, and comprising connecting means between the operating means of the tap changer and the closing mechanism of the on-load breaking device, such that when the operating means is in its intermediate position, the closing mechanism cannot move the pole or poles from their open position to their closed position.

8. The installation according to claim 1, wherein the breaking device is a circuit breaker located load-side of the tap changing device.

## Patentansprüche

1. Elektrische Transformatoranlage mit
• einem elektrischen Transformator (1) mit Primärwicklungen (2) und Sekundärwicklungen (3), welche Wicklungen einen Primärkreis mit einer oder mehreren, über Stromversorgungsleiter gespeisten Primärphasen sowie einen Sekundärkreis mit einer oder mehreren Sekundärphasen bilden, und
• einem spannungsfreien Abgriffumschalter (26), welcher Umschalter
• feststehende elektrische Kontakte (61), die elektrisch mit den Wicklungen verbunden sind,
• einen oder mehrere bewegliche Überbrückungskontakte (59), mit denen elektrische Anschlussverbindungen zwischen bestimmten der genannten feststehenden Kontakte hergestellt werden können,
• ein Umschaltorgan (58) des beweglichen Kontakts bzw. der beweglichen Kontakte (59), mit dem der bewegliche Kontakt bzw. die beweglichen Kontakte mindestens zwischen einer ersten Stellung entsprechend einer ersten Anschlussverbindung zwischen den feststehenden Kontakten (61) sowie einer zweiten Stellung entsprechend einer zweiten Anschlussverbindung zwischen den feststehenden Kontakten (61) verschoben werden können,
• ein Betätigungsorgan (32), das mindestens eine erste Stellung, eine zweite Stellung sowie eine, zwischen der ersten und der zweiten Stellung angeordnete dritte Stellung einnehmen kann,
• und eine kinematische Kette (54) umfasst, die zwischen dem Betätigungsorgan und dem Umschaltorgan angeordnet ist, derart dass das Betätigungsorgan beim Übergang von seiner ersten Stellung in seine zweite Stellung das Umschaltorgan von dessen erster Stellung in dessen zweite Stellung überführt,
welche elektrische Anlage **dadurch gekennzeichnet ist, dass** sie
• ein unter Last schaltbares elektrisches Schaltgerät (15), das
• für jeden Stromversorgungsleiter des Primärkreises einen Pol, der eine Ausschaltstellung entsprechend einer Unterbrechung des Stromflusses im Stromversorgungsleiter sowie eine Einschaltstellung entsprechend einem Stromfluss im Stromversorgungsleiter einnehmen kann,
• sowie einen Ausschaltmechanismus (22) mit Kraftspeicherantrieb umfasst, der in der Lage ist, von einem Zustand hoher Energie in einen stabilen Zustand niedriger Energie überzugehen, und über eine kinematische Kette mit jedem Pol verbunden ist, derart dass er beim Übergang von seinem Zustand hoher Energie in den Zustand niedriger Energie den Pol bzw. die Pole von deren Einschaltstellung in deren Ausschaltstellung überführt, welcher Ausschaltmechanismus eine Rastsperre (82) umfasst, die eine Verriegelungsstellung, in der sie den Ausschaltmechanismus in seinem Zustand hoher Energie verriegeln kann, sowie eine Entriegelungsstellung einnehmen kann, in der sie dem Ausschaltmechanismus erlaubt, seinen Zustand hoher Energie zu verlassen,
• sowie Verbindungsmittel (66) umfasst, die zwischen dem Betätigungsorgan (32) des Abgriffumschalters und der Rastsperre (82) des Ausschaltmechanismus' des unter Last schaltbaren elektrischen Schaltgeräts angeordnet sind, derart dass beim Übergang des Betätigungsorgans (32) von seiner ersten Stellung in seine Zwischenstellung die Rastsperre (32) in ihre Entriegelungsstellung übergeht.

2. Anlage nach Anspruch 1, bei der die kinematische Kette (54) die Bewegung des Betätigungsorgans (32) beim Übergang von dessen erster Stellung in dessen Zwischenstellung nicht auf das Umschaltorgan (58) überträgt und das Umschaltorgan (58) von dessen erster Stellung in dessen zweite Stellung verbringt, wenn das Betätigungsorgan (32) von seiner Zwischenstellung in seine zweite Stellung übergeht.

3. Anlage nach Anspruch 1, bei der die Verbindungsmittel (66) eine zwischen dem Betätigungsorgan (32) und der Rastsperre (82) angeordnete kinematische Kette umfassen.

4. Anlage nach Anspruch 1 mit einem Gefäß (4), das den Transformator (1), die Pole der Abschalteinrichtung und die Kontakte (59, 61) des Abgriffumschalters enthält.

5. Anlage nach Anspruch 1, bei der die Kontakte (59, 61) des Abgriffumschalters zwischen den jeweiligen Pol des Schaltgeräts (15) und die Wicklungen (2,3) des Transformators geschaltet sind.

6. Anlage nach Anspruch 1, bei der die unter Last schaltbare Abschalteinrichtung (15) elektromechanische Auslösemittel umfasst und die genannten Verbindungsmittel (66) einen Messwandler, der ein elektrisches Signal aussendet, wenn sich das Betätigungsorgan in der dritten Stellung befindet, sowie Übertragungsmittel zur Übertragung des Messwandlersignals an die elektromechanischen Auslösemittel umfassen, wobei die elektromechanischen Auslösemittel dazu ausgelegt sind, bei Beaufschlagung mit diesem Signal die Rastsperre von ihrer Verriegelungsstellung in ihre Entriegelungsstellung zu überführen.

7. Anlage nach Anspruch 1, bei der das Schaltgerät einen Einschaltmechanismus umfasst, um den Pol bzw. die Pole von ihrer Ausschaltstellung in ihre Einschaltstellung zu überführen, und welche Anlage Verbindungsmittel umfasst, die zwischen dem Betätigungsorgan des Abgriffumschalters und dem Einschaltmechanismus des unter Last schaltbaren Schaltgeräts angeordnet sind, derart dass der Einschaltmechanismus den Pol bzw. die Pole nicht von ihrer Ausschaltstellung in ihre Einschaltstellung überführen kann, wenn sich das Betätigungsorgan in der Zwischenstellung befindet.

8. Anlage nach Anspruch 1, bei der das Schaltgerät als auf der Einspeiseseite der Umschalteinrichtung angeordneter Leistungsschalter ausgebildet ist.
